Europäisches Patentamt

European Patent Office

Office européen des brevets

(19)

(11) Veröffentlichungsnummer: **0 375 855**

**A1**

## (12) EUROPÄISCHE PATENTANMELDUNG

(21) Anmeldenummer: **89118843.5**

(22) Anmeldetag: **11.10.89**

(51) Int. Cl.⁵: **B23B 5/22**

(30) Priorität: **30.12.88 DE 3844343**

(43) Veröffentlichungstag der Anmeldung:
**04.07.90 Patentblatt 90/27**

(84) Benannte Vertragsstaaten:
**DE ES FR GB IT SE**

(71) Anmelder: **Röhm, Günter Horst**
**Heinrich-Röhm-Strasse 50**
**D-7927 Sontheim(DE)**

(72) Erfinder: **Taglang Johann**
**Am Kreuzberg, 14**
**D-8881 Medlingen(DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau(DE)**

(54) **Kraftbetätigtes Backenspannfutter für exzentrisch zu spannende Werkstücke, insbes. Kurbelwellen.**

(57) Das Spannfutter besitzt eine koaxial zur Drehachse (3) auf einer Drehmaschinenspindel befestigbare Futterbasis (4) und einen daran gehaltenen und die Einstellung der Exzentrizität der Spannachse (7) gegenüber der Drehachse (3) ermöglichenden Spannkopf (5), in dem radial gegen die Spannachse verstellbare Spannbacken (6) geführt sind und an dem im Bereich der Drehachse (3) eine das Werkstück (1) vor seiner Einspannung ausrichtende Werkstückaufnahme (11) mit einem mindestens eine bewegliche kraftbetätigte Richtbacke (12) aufweisenden Richtbackenpaar vorgesehen ist. Die Kraftbetätigungsglieder (8, 9, 10) für die Spannbacken (6) und die für die bewegliche Richtbacke (12) sind im Spannkopf (5) angeordnet. Die Exzentrizität der Spannachse (7) gegenüber der Drehachse (3) kann verstellt werden. Dazu ist der Spannkopf (5) an der Futterbasis (4) drehbar um eine zur Dreh- und zur Spannachse (3, 7) parallele Wendeachse (14) gelagert, welche von der Drehachse (3) einen radialen Abstand (a) aufweist, der gleich der Hälfte des Längenmaßes ist, um das die Exzentrizität der Spannachse (7) gegenüber der Drehachse (3) maximal verstellbar sein soll. Der Spannkopf (5) ist durch einen Kraftantrieb (24, 25) verdrehbar und in seinen jeweiligen Drehstellungen an der Futterbasis (4) durch Vorrichtungen (16) verriegelbar. Die Futterbasis (4) mit dem Spannkopf (5) ist um die Drehachse (3) und der Spannkopf (5) ist für sich um die Wendeachse (14) ausgewuchtet.

Figur 2

**Kraftbetätigtes Backenspannfutter für exzentrisch zu spannende Werkstücke, insbesondere Kurbelwellen.**

Die Erfindung betrifft ein kraftbetätigtes Bakkenspannfutter für exzentrisch zu spannende Werkstücke, insbesondere Kurbelwellen, wobei die Spannachse parallel und exzentrisch zur Drehachse des Spannfutters verläuft, mit einer koaxial zur Drehachse auf einer Drehmaschinenspindel befestigbaren Futterbasis, einem an der Futterbasis gehaltenen und die Einstellung der Exzentrizität der Spannachse gegenüber der Drehachse ermöglichenden Spannkopf, in dem radial zentrisch gegen die Spannachse verstellbare kraftbetätigte Spannbacken geführt sind und an dem im Bereich der Drehachse eine das Werkstück vor seiner Einspannung ausrichtende Werkstückaufnahme mit einem mindestens eine bewegliche kraftbetätigte Richtbacke aufweisenden Richtbackenpaar vorgesehen ist, wobei sich die Werkstückaufnahme radial zum Spannfutterrand hin in Richtung durch die Spannachse zum Einlegen des Werkstücks öffnet und die bewegliche Richtbacke ebenfalls am Spannkopf geführt ist.

Spannfutter dieser Art sind in der DE 34 46 687 A1 beschrieben. Sie ermöglichen es, durch Verschieben des Spannkopfes an der Futterbasis beispielsweise Kurbelwellen bei im wesentlichen gleichbleibendem Spanndurchmesser, jedoch verschiedenen Kurbelhüben auf einer Drehmaschine zu bearbeiten, wobei allerdings auch eine Anpassung an andere Spanndurchmesser durch Austauschen von an den Spannbacken auswechselbaren Aufsatzbacken möglich ist. Die Futterbasis ist im Prinzip ein den Anschluß an die Drehmaschinenspindel ermöglichender Futterflansch, an dem der Spannkopf verschiebbar geführt und in seiner Führung dadurch feststellbar ist, daß er mittels einer Stellspindel über ein seine Stellung bestimmendes Distanzstück gegen die Futterbasis verspannt wird. Im Spannkopf sind die Spannbacken und sie betätigende Keilstangen geführt, die axial formschlüssig, jedoch in Verstellrichtung des Spannkopfes verschiebbar an einer sie mit einem Treibkolben verbindenden und am Treibkolben festen Spannplatte eingehängt sind. Auch zur Betätigung der beweglichen Richtbacke dient eine eigene axial bewegliche Keilstange, die ähnlich den Keilstangen für die Spannbacken verschiebbar an einer zweiten Spannplatte eingehängt ist, die fest an einen zum Antrieb nur der Richtbacke vorgesehenen zweiten Treibkolben angeschlossen ist, der koaxial zum Spannkolben für die Spannbacken und zur Drehachse der Futterbasis in letzterer geführt ist. Im Ergebnis bildet der Spannkopf bis auf die Spannplatten und die Treibkolben für sich ein komplettes Backenspannfutter, das entsprechend dem Kurbelhub des Werkstücks an der Futterbasis verstellbar ist. Um die bei dieser Verstellung sich ändernden Unwuchten des Spannfutters möglichst auszugleichen, sind am Spannkopf Unwuchtausgleichsgewichte in gleicher Verstellrichtung wie der Spannkopf verschiebbar geführt. Sie werden am Spannkopf gegenläufig zu dessen eigener Verschiebung verstellt und in ihrer jeweiligen Stellung wiederum mittels einer Spindel über passende Distanzstücke gegen den Spannkopf verspannt. -Spannfutter dieser Art besitzen den Nachteil, daß die Masse des verstellbaren Spannkopfes verhältnismäßig groß ist, daß die Massen der Unwuchtausgleichsgewichte in gleichem Maße groß sein müssen, und daß daher auch die letztenendes immer verbleibenden Restunwuchten, die von den Lagern der Drehmaschinenspindel aufgenommen werden müssen, entsprechend groß sind und die Spindellager belasten. Desweiteren ist die Einstellung des Spannkopfs und der Unwuchtausgleichsgewichte umständlich und aufwendig, da diese Einstellungen jeweils eigene Arbeitsgänge bedingen und außerdem die nach jeweils geschehener Einstellung erfolgende Verspannung zur Fixierung der Einstellung einen weiteren eigenen Arbeitsgang erfordert, der oft nicht ohne Rückwirkung auf die Einstellung selbst bleibt.

Der Erfindung liegt die Aufgabe zugrunde, ein Backenspannfutter der eingangs genannten Art so auszubilden, daß die Massen des Spannkopfes und der Unwuchtausgleichsgewichte und damit die Restunwuchten, aber auch die Masse des Backenspannfutters insgesamt, möglichst klein sind.

Diese Aufgabe wird nach der Erfindung dadurch gelöst, daß die Kraftbetätigungsglieder für die Spannbacken und die bewegliche Richtbacke im Spannkopf angeordnet sind, der an der Futterbasis drehbar um eine zur Dreh- und zur Spannachse parallele Wendeachse gelagert ist, welche von der Drehachse einen radialen Abstand aufweist, der gleich der Hälfte des Längenmaßes ist, um das die Exzentrizität der Spannachse gegenüber der Drehachse maximal verstellbar sein soll, daß ferner der Spannkopf durch einen zwischen Futterbasis und Spannkopf wirkenden Kraftantrieb um Winkel einstellbarer Größe verstellbar und in seinen jeweiligen Drehstellungen an der Futterbasis verriegelbar ist, und daß die Futterbasis mit dem Spannkopf um die Drehachse und der Spannkopf für sich um die Wendeachse ausgewuchtet sind.

Bei dem erfindungsgemäßen Spannfutter besitzen die Drehachse und die Wendeachse eine in Bezug auf die Futterbasis und die Wendeachse und die Spannachse eine in Bezug auf den Spannkopf körperfeste Lage. Durch Drehen des Spannkopfes in Bezug auf die Futterbasis ändert sich daher der Abstand zwischen der Drehachse und der Spannachse, und zwar um maximal das Doppelte des Abstands zwischen der Wendeachse und der Drehachse. Der Abstand zwischen der Drehachse und der Spannachse bestimmt die Exzentrizität, die somit durch Verdrehen des Spannkopfes gegenüber der Futterbasis einstellbar ist. Allerdings ändert sich dabei auch die Ausrichtung der Werkstückaufnahme und der Richtbacken in Bezug auf die von den Werkstückbeschickeinrichtungen für das Einlegen der Werkstücke in die Werkstückaufnahme fest vorgegebene Beschickrichtung. Um dennoch die Werkstücke weiter einlegen zu können, muß nach dem Verdrehen des Spannkopfes relativ zur Futterbasis das Spannfutter insgesamt um denselben Winkel zurück- oder um den Ergänzungswinkel auf 360° vorangedreht werden, damit die Richtung der Werkstückaufnahme, in der die Werkstücke in die Werkstückaufnahme eingelegt werden können, wieder mit der Beschickrichtung der dazu vorgesehenen Werkstückbeschickeinrichtungen übereinstimmt. Dieses Verstellen der Stillstandslage des Spannfutters läßt sich bei modernen Drehmaschinen mit bezüglich des Drehwinkels der Drehmaschinenspindel gesteuerter C-Achse problemlos beherrschen. Im Ergebnis wird die Stillstandslage der Drehmaschinenspindel gegenläufig oder mitläufig zur Verdrehung des Spannkopfes um denselben oder den Ergänzungswinkel auf 360° geändert. - Das Verdrehen des Spannkopfes in Bezug auf die Futterbasis erzeugt am Spannfutter keine Unwuchten, da der Spannkopf in Bezug auf die Wendeachse ausgewuchtet ist. Änderungen der Exzentrizität können daher nur zu solchen Unwuchten führen, die durch die der geänderten Exzentrizität entsprechenden Änderungen des Werkstücks selbst bedingt sind. Diese Unwuchten sind klein und können durch entsprechend geringe Unwuchtausgleichsgewichte im Spannfutter behoben werden. Diese Unwuchtausgleichsgewichte können automatisch mit der Drehung des Spannkopfes verstellbar sein, so daß der Unwuchtausgleich gleichsam selbsttätig erfolgt.

Eine besonders bevorzugte Ausführungsform der Erfindung ist dadurch gekennzeichnet, daß der Spannkopf über einen Winkel von 180° zwischen zwei Endlagen verdrehbar ist, in welchen die Spannachse, die Wendeachse und die Drehachse in einer gemeinsamen Ebene liegen. In diesem Fall erfolgt die Ausrichtung des Werkstücks in Bezug auf die in beiden Endstellungen der Spannkopfdrehung übereinstimmende Ebene durch die drei genannten Achsen. Die auf diese Ebene als Richtebene abgestimmten Richtbacken bedürfen daher keiner Änderungen, um beiden Endlagen angepaßt zu sein. Lediglich die effektive Tiefe der Werkstückaufnahme ist den geänderten Werkstückabmessungen anzupassen, was durch Wechsel geeigneter Tiefenanschläge oder dergl. unschwer möglich ist. Es ist aber selbstverständlich auch möglich, Drehstellungen zwischen diesen beiden Endstellungen zu verwirklichen und damit die Exzentrizität zwischen den durch die beiden Endstellungen bestimmten Grenzwerten einzustellen. In diesen Fällen liegen allerdings die Drehachse, die Schwenkachse und die Spannachse nicht mehr in einer gemeinsamen Ebene. Die Ebene durch die Drehachse und die Schwenkachse einerseits und die Ebene durch die Schwenkachse und die Spannachse andererseits schließen einen spitzen Winkel miteinander ein, dessen Tangens aber niemals größer ist als der Quotient aus dem Abstand von Drehachse und Wendeachse als Zähler und dem Abstand von Wendeachse und Spannachse als Nenner. Die Richtbacken müssen allerdings der Ebene durch die Drehachse und die Spannachse als Richtebene angepaßt sein, die in Bezug auf den Spannkopf aber nicht körperfest ist, so daß die Richtbacken in diesen Fällen jeweils anderer, dem Verlauf der Richtebene angepaßter Aufsatzbacken bedürfen.

In konstruktiver Hinsicht empfiehlt sich eine Anordnung, bei der der Spannkopf einen mit der Wendeachse koaxialen Zapfen aufweist, der in einer Bohrung der Futterbasis gelagert ist und eine Umfangsverzahnung aufweist, die mit sich am Zapfen gegenüber liegenden, gegenläufig bewegten Zahnstangen kämmen, welche von den Kraftantrieb für die Spannkopfdrehung bildenden, in der Futterbasis angeordneten Zylinderkolbeneinheiten beaufschlagbar sind. Diese Anordnung hat den Vorteil, daß die gegenläufige Bewegung der Zahnstangen und der sie antreibenden Kolben keine Unwuchten erzeugt. Soweit in dem schon erwähnten Umfang werkstückbedingte Unwuchten auszugleichen sind, empfiehlt sich vorzugsweise eine Anordnung, bei der radial in einer Aussparung der Futterbasis ein Unwuchtausgleichsgewicht geführt ist, das mit der Drehung des Spannkopfes verstellbar ist und dazu mit einem Steuervorsprung in eine sich in Umfangsrichtung am Spannkopf erstreckenden Steuernut greift.

Zur Verriegelung der Drehstellungen des Spannkopfs gegenüber der Futterbasis empfiehlt sich die Verwendung einer sinngemäß bei getakteten Drehtischen bekannten Ausführungsform, die dadurch gekennzeichnet ist, daß zur Verriegelung des Spannkopfes Hirth-verzahnte Unterringe am Spannkopf und an der Futterbasis und ein an den Unterringen zum Eingriff kommender Oberring mit entsprechender Gegenverzahnung vorgesehen sind, wobei der Oberring mit einer Zylinderkolbeneinheit axial gegen die Unterringe verstellbar ist.

Im folgenden wird die Erfindung an einem in der Zeichnung dargestellten Ausführungsbeispiel näher erläutert; es zeigen:

Fig. 1 eine Stirnansicht eines Backenspannfutters nach der Erfindung von der Vorderseite,

Fig. 2 den Schnitt II - II in Fig. 1,

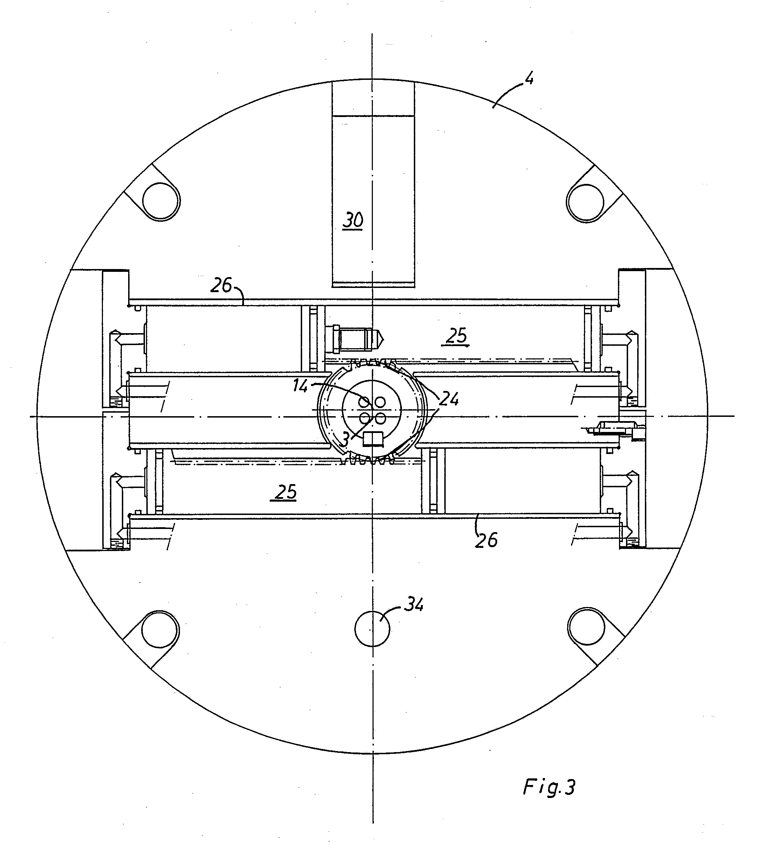

Fig. 3 den Schnitt III - III in Fig. 2.

Fig. 4 eine Schemazeichnung zur Erläuterung der Achsenverstellungen bei der Spannkopfdrehung.

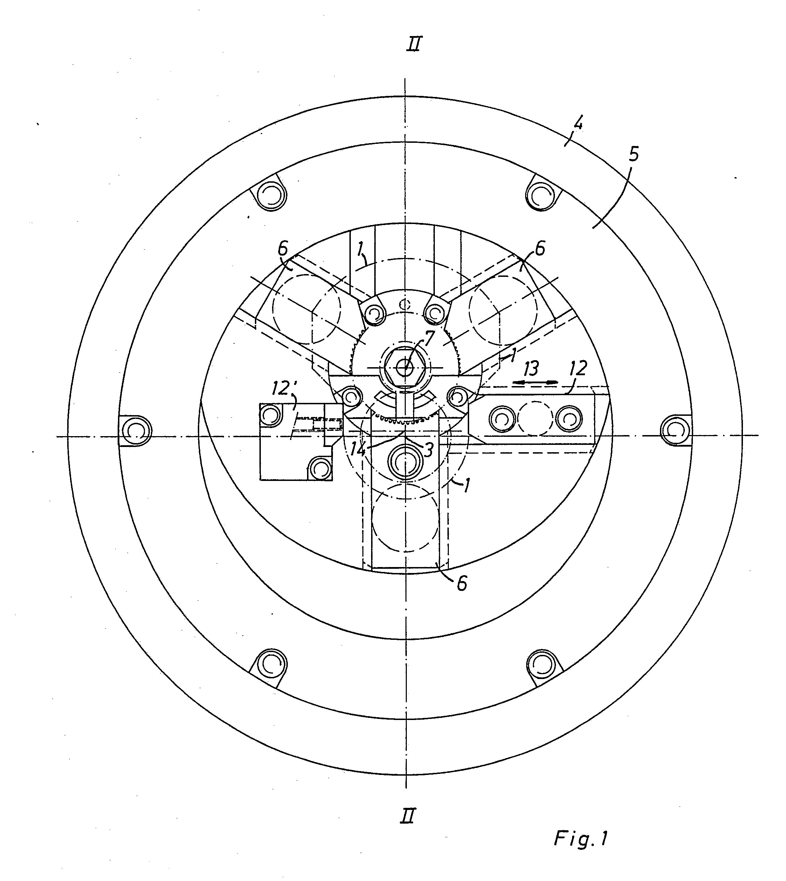

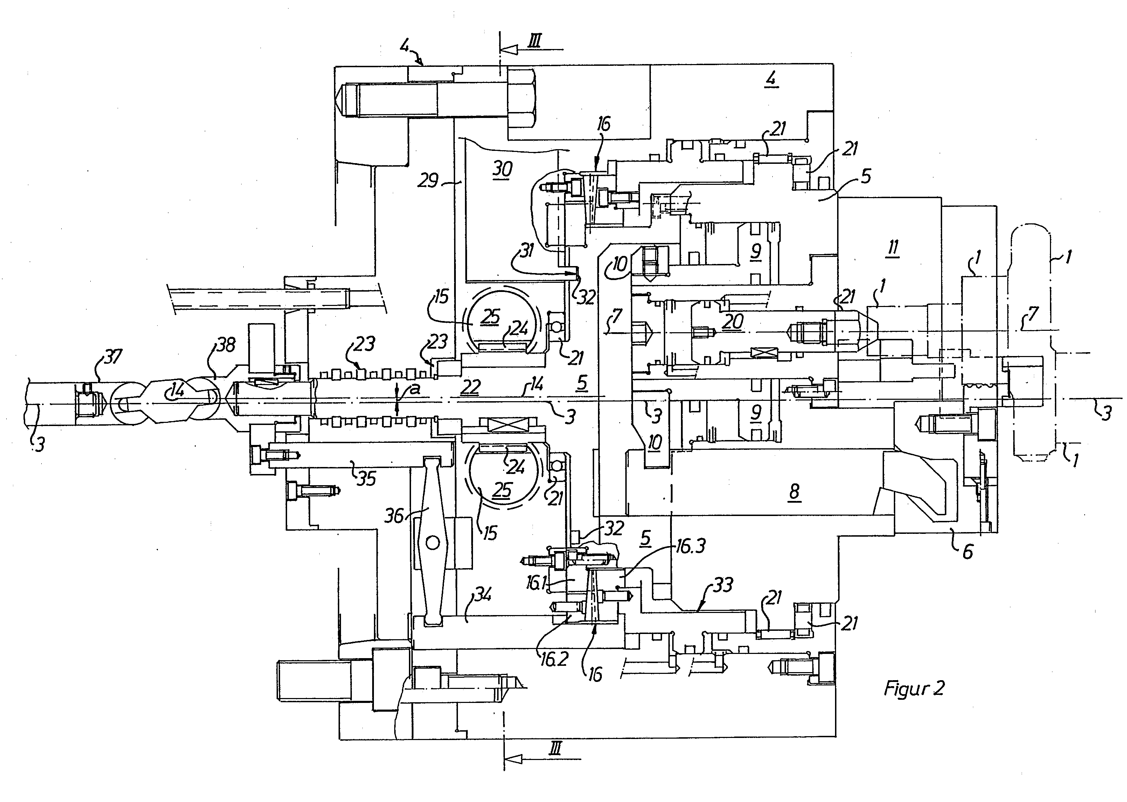

Das Backenspannfutter dient zum exzentrischen Spannen von Kurbelwellen, deren axial gesehener Umriß bei 1 in den Fig. 1 und 2 gestrichelt angedeutet ist. Das Backenspannfutter besteht seinem grundsätzlichen Aufbau nach aus einer koaxial auf einer nicht dargestellten Drehmaschinenspindel mit Drehachse 3 befestigbaren Futterbasis 4 und einem allgemein mit 5 bezeichneten Spannkopf mit Spannbacken 6, die radial zu einer mit der Drehachse 3 parallelen Spannachse 7 verschiebbar geführt und über axial bewegliche Keilstangen 8 über eine Spannplatte 10 an einen im Spannkopf 5 axial verstellbaren, ringförmigen Treibkolben 9 angeschlossen sind. Außerdem ist der Spannkopf 5 an im Bereich der Drehachse 3 mit einer das Werkstück 1 vor seiner Einspannung ausrichtenden Werkstückaufnahme 11 und mit einem Richtbackenpaar 12, 12' ausgestattet, von welchen im Ausführungsbeispiel die Richtbacke 12 beweglich ist und kraftbetätigt verstellt werden kann. Die Werkstückaufnahme 11 öffnet sich radial zum Spannfutterrand hin in Richtung durch die Spannachse 7 zum Einlegen des Werkstückes. Die bewegliche Richtbacke 12 ist in Richtung des Pfeiles 13 radial zu einer im einzelnen noch zu beschreibenden Wendeachse 14 ebenfalls am Spannkopf 5 geführt und ähnlich wie die Spannbacken 6 über eine Keilstange durch einen im Spannkopf 5 angeordneten Kraftantrieb verstellbar, was in der Zeichnung, da an sich bekannt, nicht dargestellt ist.

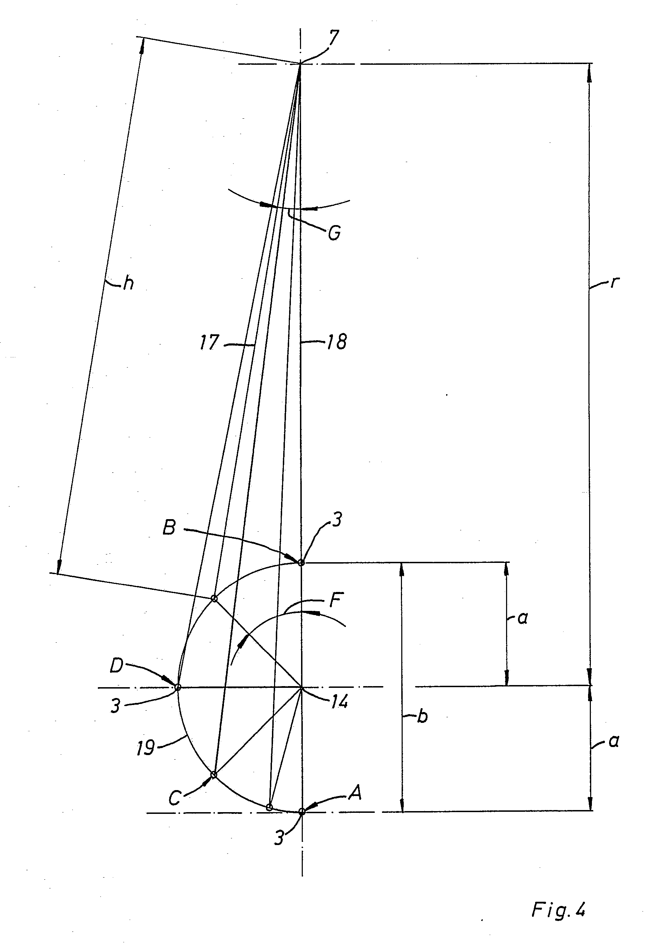

Der Spannkopf 5 ist an der Futterbasis 4 drehbar um die schon erwähnte, zur Drehachse 3 und zur Spannachse 7 parallele Wendeachse 14 gelagert. Diese Wendeachse 14 weist von der Drehachse 3 einen radialen Abstand a auf, der gleich der Hälfte des Längenmaßes b (Fig. 4) ist, um das die Exzentrizität der Spannachse 7 gegenüber der Drehachse 3 maximal verstellbar sein soll. Um diese Wendeachse 14 ist der Spannkopf 5 durch einen zwischen Futterbasis 1 und Spannkopf 5 wirkenden, allgemein mit 15 bezeichneten Kraftantrieb um Winkel einstellbarer Größe verstellbar sowie in seinen jeweiligen Drehstellungen an der Futterbasis 1 durch eine allgemein mit 16 bezeichnete Verriegelungseinrichtung verriegelbar. Die Futterbasis 1 mit dem Spannkopf 5 ist um die Drehachse 3 und der Spannkopf 5 für sich um die Wendeachse 14 ausgewuchtet.

Im Ausführungsbeispiel ist der Spannkopf 5 über einen Winkel von 180° zwischen zwei Endlagen A, B verdrehbar, in welchen die Spannachse 7, die Wendeachse 14 und die Drehachse 5 in einer gemeinsamen Ebene liegen. Fig. 4 zeigt in einem auf den Spannkopf 5 bezogenen körperfesten Bezugssystem die gegenseitige Lage dieser Achsen 5, 7, 14 in den Endstellungen A und B. Ist der Abstand zwischen der Spannachse 7 und der Wendeachse 14, ergibt sich die Änderung des Abstandes h zwischen der Spannachse 7 und der Drehachse 3 und damit die Exzentrizitätsänderung zwischen beiden Endlagen, A, B auf das Doppelte des Abstands a zwischen Drehachse 3 und Wendeachse 14. Im Prinzip können auch zwischen diesen Endlagen A, B liegende Zwischenlagen C, D, ... verwirklicht werden. Jedoch liegen dann die Drehachse 3, die Wendeachse 14 und die Spannachse 7 nicht mehr in einer gemeinsamen Ebene. Vielmehr schließen die Ebene 18 durch die Spannachse 7 und die Wendeachse 14 einerseits und die Ebene 17 durch die Spannachse 7 und die Drehachse 3 andererseits einen Winkel G miteinander ein, dessen maximale Größe durch

$$\tan g\ G\ a/$$

gegeben ist.

Bei der Verdrehung des Spannkopfes 5 gegenüber der Futterbasis 1 zwischen den Endlagen A und B durchläuft die Drehachse 3 einen Kreis 19 um die Wendeachse 14 als Mittelpunkt. Man erkennt, daß der Exzentrizitätshub h gegeben ist durch

$$h = a^2 + {}^2 - 2racosF$$

worin F der Winkel ist, um den der Spannkopf 5 gegenüber der Futterbasis 1 verdreht worden ist.

Die Richtbacken 12 müssen auf die Ebene 17 durch die Spannachse 7 und die Drehachse 3 abgestimmt sein. Diese Ebene ist jedoch nicht körperfest, so daß für jede Einstellung C, D, ... die Richtbacken 12 durch geeignete Aufsatzbacken den verschiedenen Lagen der Ebene 17 als Richtebene angepaßt werden müssen. Lediglich in den Endlagen A und B fällt die Richtebene 17 für die Richtbacken 12 mit der allen drei Achsen gemeinsamen Ebene 18 zusammen, so daß die Richtbacken 12 12 bei ausschließlicher Einstellung immer nur der Endlagen A und B keiner Änderungen bedürfen.

Im einzelnen ist konzentrisch zur Spannachse 7 eine durch einen Kolben 20 im Spannkopf 5 kraftbetätigte Zentrierspitze 21 vorgesehen. Der Spannkopf 5 ist über Lager 21 an der Futterbasis 1 abgestützt. Zu seinem Verdrehen besitzt der Spannkopf 5 einen mit der Wendeachse 14 koaxialen Zapfen 22, der in einer Bohrung 23 der Futterbasis 1 gelagert ist. Der Zapfen 22 besitzt eine Umfangsverzahnung 24, die mit sich am Zapfen 22 gegenüber liegenden, gegenläufig bewegten Zahnstangen 25 kämmen. Die Zahnstangen 25 sind von in der Futterbasis 1 angeordneten Zylinderkolbeneinheiten 26 beidseitig beaufschlagbar, die den Kraftantrieb für die Spannkopfdrehung bilden. Eine axiale Verlängerung des Zapfens 22 ist als Druckmittelverteilungssystem 23 ausgebildet, über das in bekannter Weise vom Druckmittel beaufschlagte Kanäle der Futterbasis mit entsprechenden Kanälen im Zapfen 22 in Verbindung stehen, welche die verschiedenen Zylinderräumen im Spannkopf 5 mit Druckmittel versorgen.

Zum Ausgleich werkstückbedingter Unwuchten ist in einer Aussparung 29 der Futterbasis 1 radial ein Unwuchtausgleichgewicht 30 geführt. Dieses Unwuchtausgleichgewicht 30 ist mit der Drehung des Spannkopfes 5 automatisch verstellbar. Dazu ist im Ausführungsbeispiel das Unwuchtausgleichgewicht 30 mit einem Steuervorsprung 31 versehen, der in eine sich in Umfangsrichtung am Spannkopf 5 erstreckende Steuernut 32 greift, die im wesentlichen eine Spiralnut um die Wendeachse 14 darstellt, so daß beim Drehen des Spannkopfs 5 das Unwuchtausgleichgewicht 30 über die Steuernut 32 in gewünschter Weise radial verstellt wird.

Zur Verriegelung des Spannkopfes 5 dienen Hirth-verzahnte Unterringe 16.1, 16.2 am Spannkopf 5 und an der Futterbasis 1 und ein an den Unterringen zum Eingriff kommender Oberring 16.3 mit entsprechender Gegenverzahnung. Der Oberring 16.3 ist mit einer Zylinderkolbeneinheit 33 axial gegen die Unterringe 16.1, 16.2 verstellbar. Der Verriegelungszustand wird überwacht durch ein Kontrollgestänge aus den Stäben 34 und 35 und einem sie verbindenden zweiarmigen Hebel 36. Ebenso ist eine Kontrolle der Drehstellung des Spannkopfes 5 dadurch möglich, daß eine zentrisch in der Drehmaschinenspindel geführte Stange 37 gelenkig über eine Muffe 38 mit dem Zapfen 22 verbunden ist und der Muffe 38 oder der Stange 37 an geeigneter Stellung eine die Drehstellung erfassender, nicht dargestellter Sensor zugeordnet ist.

## Ansprüche

1. Kraftbetätigtes Backenspannfutter für exzentrisch zu spannende Werkstücke (1), insbesondere Kurbelwellen, wobei die Spannachse (7) parallel und exzentrisch zur Drehachse (3) des Spannfutters verläuft, mit einer koaxial zur Drehachse (3) auf einer Drehmaschinenspindel befestigbaren Futterbasis (1), einem an der Futterbasis (1) gehaltenen und die Einstellung der Exzentrizität der Spannachse (7) gegenüber der Drehachse (3) ermöglichenden Spannkopf (5), in dem radial zentrisch gegen die Spannachse (7) verstellbare kraftbetätigte Spannbacken (6) geführt sind und an dem im Bereich der Drehachse (3) eine das Werkstück (1) vor seiner Einspannung ausrichtende Werkstückaufnahme (11) mit einem mindestens eine bewegliche kraftbetätigte Richtbacke (12) aufweisenden Richtbackenpaar vorgesehen ist, wobei sich die Werkstückaufnahme (11) radial zum Spannfutterrand hin in Richtung durch die Spannachse (7) zum Einlegen des Werkstücks (1) öffnet und die bewegliche Richtbacke (12) ebenfalls am Spannkopf (5) geführt ist, dadurch gekennzeichnet, daß die Kraftbetätigungsglieder (8, 9, 10) für die Spannbacken (6) und die bewegliche Richtbacke (12) im Spannkopf (5) angeordnet sind, der an der Futterbasis (1) drehbar um eine zur Dreh- und zur Spannachse (3, 7) parallele Wendeachse (14) gelagert ist, welche von der Drehachse (3) einen radialen Abstand (a) aufweist, der gleich der Hälfte des Längenmaßes ist, um das die Exzentrizität der Spannachse (7) gegenüber der Drehachse (3) maximal verstellbar sein soll, daß ferner der Spannkopf (5) durch einen zwischen Futterbasis (1) und Spannkopf (5) wirkenden Kraftantrieb (24, 25, 26) um Winkel einstellbarer Größe verstellbar und in seinen jeweiligen Drehstellungen an der Futterbasis (1) verriegelbar ist, und daß die Futterbasis (1) mit dem Spannkopf (2) um die Drehachse (3) und der Spannkopf (5) für sich um die Wendeachse (14) ausgewuchtet sind.

2. Spannfutter nach Anspruch 1, dadurch gekennzeichnet, daß der Spannkopf (5) über einen Winkel von 180° zwischen zwei Endlagen (A, B) verdrehbar ist, in welchen die Spannachse (7), die Wendeachse (14) und die Drehachse (3) in einer gemeinsamen Ebene (18) liegen.

3. Spannfutter nach Anspruch 1 oder 2, dadurch gekennzeichnet, daß der Spannkopf (5) einen mit der Wendeachse (14) koaxialen Zapfen (22) aufweist, der in einer Bohrung (23) der Futterbasis (1) gelagert ist und eine Umfangsverzahnung (24) aufweist, die mit sich am Zapfen (22) gegenüber liegenden, gegenläufig bewegten Zahnstangen (25) kämmen, welche von den Kraftantrieb für die Spannkopfdrehung bildenden, in der Futterbasis (1) angeordneten Zylinderkolbeneinheiten (26) beaufschlagbar sind.

4. Spannfutter nach einem der Ansprüche 1 bis 3, dadurch gekennzeichnet, daß radial in einer Aussparung (29) der Futterbasis (1) ein Unwuchtausgleichgewicht (30) geführt ist, das mit der Drehung des Spannkopfes (5) verstellbar ist und dazu mit einem Steuervorsprung (31) in eine sich in Umfangsrichtung am Spannkopf (5) erstreckende Steuernut (32) greift.

5. Spannfutter nach einem der Ansprüche 1 bis 3, dadurch gekennzeichnet, daß zur Verriegelung des Spannkopfes (5) Hirth-verzahnte Unterringe (16.1, 16.2) am Spannkopf (5) und an der Futterbasis (1) und ein an den Unterringen zum Eingriff kommender Oberring (16.3) mit entsprechender Gegenverzahnung vorgesehen sind, wobei der Oberring (16.3) mit einer Zylinderkolbeneinheit (33)

axial gegen die Unterringe (16.1, 16.2) verstellbar ist.

Fig.1

Figur 2

Fig.3

Fig. 4

## EINSCHLÄGIGE DOKUMENTE

EP 89118843.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4 5 |
|---|---|---|---|
| D,A | <u>DE - A1 - 3 446 687</u><br>(RÖHM)<br>    * Fig. 1-9; Zusammen-<br>      fassung *<br>        -- | 1 | B 23 B 5/22 |
| A | <u>EP - A2 - 0 250 724</u><br>(RÖHM)<br>    * Fig. 1-7; Zusammen-<br>      fassung *<br>        -- | 1 | |
| A | <u>GB - A - 1 040 192</u><br>(FISCHER)<br>    * Fig. 1; Spalte 2,<br>      Zeilen 40-43 *<br>        ---- | 1 | |

RECHERCHIERTE
SACHGEBIETE (Int. Cl.X) 5

B 23 B 5/00
B 23 B 31/00

Der vorliegende Recherchenbericht wurde für alle Patentansprüche erstellt.

| Recherchenort | Abschlußdatum der Recherche | Prüfer |
|---|---|---|
| WIEN | 12-02-1990 | BRÄUER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82